# EUROPEAN PATENT SPECIFICATION

(11) **EP 4 037 604 B1**
(45) Date of publication and mention of the grant of the patent: **31.07.2024**
(21) Application number: 20775870.7
(22) Date of filing: 25.09.2020
(51) Int. Cl.: A61C 17/02, A61C 17/028, A61C 17/024

(54) **NOZZLE UNIT FOR DIRECTING IRRIGATION FLUID TOWARDS PERIODONTAL POCKETS**
DÜSENEINHEIT ZUM LEITEN DER SPÜLFLÜSSIGKEIT IN DIE PARODONTALTASCHEN
BUSE POUR DIRIGER LE LIQUIDE D'IRRIGATION VERS LES POCHES PARODONTALES

(30) Priority: 30.09.2019 EP 19200458
(43) Date of publication of application: 10.08.2022
(73) Proprietor: Koninklijke Philips N.V., 5656 AG Eindhoven (NL)
(72) Inventor: GOTTENBOS, Bart, 5656 AE Eindhoven (NL); FRACKOWIAK, Bruno Jean François, 5656 AE Eindhoven (NL); VAN HULTEN, Maaike Cornelia Johanna Wilhelmina, 5656 AE Eindhoven (NL); NGUYEN, An, 5656 AE Eindhoven (NL); LAVEZZO, Valentina, 5656 AE Eindhoven (NL); HÖTZL, Sandra, 5656 AE Eindhoven (NL)
(74) Representative: Philips Intellectual Property & Standards
(86) International application number: PCT/EP2020/076885
(87) International publication number: WO 2021/063827

(56) References cited:
- WO-A1-2015/173699
- WO-A1-2019/008586
- WO-A1-96/25121
- GB-A- 2 555 449
- US-A1- 2002 152 565
- US-A1- 2010 015 567
- US-A1- 2013 266 908

## Description

### FIELD OF THE INVENTION

The invention relates to a nozzle unit comprising at least one nozzle orifice, which nozzle unit is designed to be used as part of an oral irrigator, for emitting a flow of irrigation fluid to be directed towards periodontal pockets in a subject's mouth.

The invention also relates to an oral irrigator comprising a nozzle unit, and to a method of performing an oral cleaning action, wherein a flow of irrigation fluid is directed towards periodontal pockets in a subject's mouth.

### BACKGROUND OF THE INVENTION

The invention is in the field of oral healthcare, which is a field in which hygiene and health of teeth and gums are of utmost importance and in which there is an ongoing need for useful oral cleaning tools and methods.

One widespread and commonly known oral disease is periodontitis, which is a gum infection. Periodontitis is irreversible due to breakdown of teeth-supporting tissues which do not completely restore. This results in the gums detaching from the teeth, whereby a gap is formed between the teeth surface and the gums. This gap, which is referred to as periodontal pocket or simply pocket, forms a favorable niche for specific bacteria species to grow. Further progression might lead to the teeth becoming loose and even fall out.

Many people are diagnosed with periodontitis, but there is also a large population which has periodontitis or early pocket formation, which is not recognized by the people concerned themselves or professionals. If in such cases no extra care is taken on the oral hygiene, the pockets can further progress and deepen, leading eventually to severe periodontitis conditions.

The golden standard treatment for periodontitis is professional scaling and root planing. This treatment involves the experienced hand of the dental professional to debride the tooth and root surface from calculus and biofilm. For successful treatment, patients are enrolled in a maintenance therapy with return for professional cleaning every 3-4 months. Studies show a low compliance of patients to commit to a one-hour appointment for a maintenance treatment spanning several years. Therefore, there is a strong need for home use products for pocket cleaning maintenance therapy. Such home use products may also be useful in preventing initial pockets from progressing, even before professional treatment of scaling and root planing is needed.

In the art, subgingival irrigation using dental water jets has been proposed as a home solution for cleaning pockets, but it appears that the available devices are not really effective in arresting or reversing periodontitis. One of the technical challenges in the field resides in the fact that fluid is not easily made to flow to the deeper parts of pockets so that fluidic forces remain at a superficial level. In this respect, it is to be noted that devices comprising a special nozzle unit for subgingival irrigation, which nozzle unit needs to be placed with the tip in the pockets, are available. However, such placing of the nozzle unit is quite difficult to realize and may be inconvenient or even painful to a person using the device of which the nozzle unit is part.

WO 2015/173699 A1 discloses a nozzle for an oral irrigator device having a guidance tip with at least one orifice at one end, and a nozzle spacer assembly positioned around the at least one orifice.

US 2002/152565 A1 discloses a toothbrush system using a combination of mechanical force and fluid dynamics to increase the efficiency of plaque removal from the teeth and gums.

US 2010/015567 A1 discloses a dental hygiene tool particularly adapted for cleaning and treating dental spaces, surfaces and other areas including interproximal surfaces, orthodontic appliances, bridgework, crowns, surgical sites, implants, and periodontal pockets and for gently massaging and compressing gingival tissues and to help reduce inflammation and pocket depth.

WO 96/25121 A1 discloses an oral douche with a stirrup shaped nozzle holder whose two legs engage about both sides of the teeth.

US 2013/266908 A1 discloses a polisher nozzle including a body extending between a proximal portion for connection to a handpiece and a distal portion, the body having a first channel for delivering a polishing powder and a second channel for delivering a fluid.

WO 2019/008586 A1 discloses an intra oral scanner (IOS) including a probe, wherein the probe may be used to locate points in a 3D map at high precision and/or the points used to increase the precision of location of other points and/or surfaces in the map.

### SUMMARY OF THE INVENTION

The invention is defined by claim 1 of the appended set of claims.

According to the invention, measures aimed at realizing improvement in respect of cleaning periodontal pockets are taken.

In one aspect, the invention provides a nozzle unit comprising at least one nozzle orifice, which nozzle unit is designed to be used as part of an oral irrigator, for emitting a flow of irrigation fluid to be directed towards periodontal pockets in a subject's mouth, and which nozzle unit has at least one constructional feature configured to contribute to realizing a predetermined orientation of a flow of irrigation fluid with respect to a subject's respective teeth and periodontal pockets in an operational situation involving functional placement of the nozzle unit with the at least one nozzle orifice in the vicinity of the subject's respective teeth at the position of interdental interfaces, namely an orientation from the at least one nozzle orifice towards the periodontal pockets at a pocket inflow angle in a range of 10° to 50° and from the at least one nozzle orifice towards the surface of the subject's respective teeth at a surface impact angle in a range of 0° to 50°, preferably 10° to 50°, the pocket inflow angle being defined in a first plane extending parallel to a central vertical axis of the subject's respective teeth and having an interdental orientation, and the surface impact angle being defined in a second plane extending both parallel to the central vertical axis of the subject's respective teeth and perpendicular to the first plane, wherein the pocket inflow angle is an angle between a direction of the flow of irrigation fluid as projected on the first plane and a direction of the central vertical axis of the subject's respective teeth, and wherein the surface impact angle is an angle between a direction of the flow of irrigation fluid as projected on the second plane and the direction of the central vertical axis of the subject's respective teeth.

In experiments and simulations which have been performed in the context of the invention, it has been found that effectiveness of cleaning periodontal pockets by means of a nozzle unit can be improved by orienting a flow of irrigation fluid with respect to a subject's respective teeth and pockets in a certain way while having a functional placement of the nozzle unit with the at least one nozzle orifice in the vicinity of the subject's respective teeth at the position of interdental interfaces. In respect of the effective orientation of the flow of irrigation fluid with respect to a subject's respective teeth and pockets, it has particularly been found that it is advantageous if the flow is oriented from the at least one nozzle orifice towards the periodontal pockets at a pocket inflow angle in a range of 10° to 50° and from the at least one nozzle orifice towards the surface of the subject's respective teeth at a surface impact angle in a range of 0° to 50°, preferably 10° to 50°, wherein the pocket inflow angle and the surface impact angle are the respective angles as defined in the foregoing. The direction of the central vertical axis of the subject's respective teeth corresponds more or less to the direction of a local normal of the subject's respective jaws and should be understood so as to be defined in relation to a subject's mouth in a normal orientation thereof with a general direction in which the jaws extend representing a more or less horizontal orientation.

When the invention is applied, that is to say, when the nozzle unit is placed in the vicinity of the subject's respective teeth at the position of interdental interfaces and the nozzle unit is oriented so as to realize the flow of irrigation fluid at the appropriate pocket inflow angle and surface impact angle, the full depth of a pocket can be reached without a need of placing a nozzle orifice in the pocket.

Numerous practical embodiments of the nozzle unit are feasible within the framework of the invention. In the following, a number of those embodiments will be defined and elucidated, wherein it is to be noted that the following classes are applicable to the embodiments of the nozzle unit according to the invention:
1) passive nozzle units which realize the effective orientation of the flow of irrigation fluid when they are properly positioned by a user. The nozzle unit may be designed to emit irrigation fluid from two or more nozzle orifices in order to increase the probability that pockets are treated in the correct way.
2) active nozzle units which are designed so as to have movement of the at least one nozzle orifice during operation, which movement may be of oscillating or rotating nature, for example. On the basis of the movement of the at least one nozzle orifice, a larger range of angles and positions is covered, realizing the appropriate ones in the process. Active nozzle units are more robust to anatomic variations and user positioning variations, but also spill more fluid on angles and positions which are not effective.
3) smart nozzle units which employ sensors to determine the correct positioning, so that the nozzle unit can be aimed to emit the irrigation fluid at the appropriate angulation. Smart nozzle units are optimal for efficacy and ease-of-use.

In a first practical embodiment, the nozzle unit comprises at least two nozzle orifices, which at least two nozzle orifices are configured and arranged to emit irrigation fluid in different directions from the nozzle unit. Such a nozzle unit may comprise a valve arrangement at a position between two nozzle orifices, for realizing a first operational condition in which one of the nozzle orifices is opened and the other of the nozzle orifices is blocked, and a second operational condition in which the one of the nozzle orifices is blocked and the other of the nozzle orifices is opened. The valve arrangement may comprise an oscillating valve, for example.

According to another or an additional option, the at least one nozzle orifice and/or a portion of the nozzle unit accommodating the at least one nozzle orifice have an adjustable positioning in the nozzle unit.

In a first practical embodiment residing under the adjustable nozzle orifice positioning option, the nozzle unit includes at least one flexible portion, which may allow for realizing manually adjustable positioning of the at least one nozzle orifice, for realizing movement of the at least one nozzle orifice under the influence of a pulsed fluid flow, for realizing twisting/rotating of a distal end portion, etc.

In a second practical embodiment residing under the adjustable nozzle orifice positioning option, the nozzle unit includes a tubular flexible portion and a distal end portion extending from the flexible portion, the distal end portion including at least two radial arms having a nozzle orifice arranged at an end thereof. In such an arrangement, rotational oscillation of the distal end portion including the radial arms can be obtained under the influence of a pulsed fluid flow.

In a third practical embodiment residing under the adjustable nozzle orifice positioning option, the nozzle unit comprises a rotatably arranged distal end portion including at least one nozzle orifice. In such a case, the nozzle unit may comprise a fluid-driven arrangement which is associated with the rotatably arranged distal end portion, wherein the fluid-driven arrangement may include an impellor, for example.

In a fourth practical embodiment residing under the adjustable nozzle orifice positioning option, the nozzle unit comprises a distal end portion including at least one nozzle orifice which is movably arranged in the distal end portion. For example, the at least one nozzle orifice may have a tiltable or rotatable arrangement in the distal end portion. In any case, in this embodiment, it may be advantageous if the nozzle unit comprises a drive mechanism which is configured and arranged to bring about movement of the at least one movably arranged nozzle orifice in the distal end portion, which movement may be an oscillating movement or any other appropriate movement.

In a fifth practical embodiment residing under the adjustable nozzle orifice positioning option, the nozzle unit comprises a sensor arrangement which is configured and arranged to sense oral configuration features, and which is configured and arranged to generate input suitable to be received and processed by a controller which is configured and arranged to control positioning of the at least one nozzle orifice and/or a portion of the nozzle unit accommodating the at least one nozzle orifice on the basis of the input from the sensor arrangement. The sensor arrangement may be designed in any suitable way, and may be equipped with 3D cameras, radar, components for tactile or capacitive sensing, etc. The oral configuration features may be at least one of a position of the gum line, a shape of the gum line, a shape of the teeth, etc.

When it comes to equipping the nozzle unit with a sensor arrangement, it is additionally or rather alternatively possible that the sensor arrangement is configured and arranged to sense the orientation of the flow of irrigation fluid with respect to a subject's respective teeth and periodontal pockets in the operational situation, and to generate input suitable to be received and processed by a controller which is configured and arranged to control a user interface configured to convey information to a user. For example, the information may be actual information about the pocket inflow angle and surface impact angle and/or an indication as to how at least one of the angles should be adjusted in order to obtain optimal cleaning results. In any case, a process of monitoring the orientation of the flow of irrigation fluid and providing associated information to a user may enable the user to take action to make appropriate adjustments of the orientation/positioning of the nozzle unit in its entirety if necessary.

In the framework of the invention, it is also possible to have an embodiment of the nozzle unit in which the nozzle unit comprises at least one projecting element (spacer) which is configured and arranged to realize the effective orientation of the flow of irrigation fluid through supporting the nozzle unit on at least one of the teeth and the gums in a predetermined way defined by its shape and dimensions, wherein the appropriate angulation of the irrigation fluid to be emitted from the nozzle unit is automatically obtained when the nozzle unit is positioned near the teeth and the gums and the at least one projecting element is made to contact the at least one of the teeth and the gums.

The invention also relates to an oral irrigator, comprising a nozzle unit according to one of the options covered by the invention as defined and elucidated in the foregoing, and further comprising a fluid supply system which is configured and arranged to supply irrigation fluid to the nozzle unit so as to enable the nozzle unit to emit the irrigation fluid. Especially for the purpose of realizing adjustable positioning of the at least one nozzle orifice of the nozzle unit in embodiments of the nozzle unit which are designed to allow such positioning, it may be practical if the fluid supply system is configured and arranged to supply irrigation fluid to the nozzle unit in a pulsed flow.

In case the oral irrigator comprises a nozzle unit comprising a sensor arrangement as defined in the foregoing, it is practical if the oral irrigator further includes a fluid supply system which is configured and arranged to supply irrigation fluid to the nozzle unit so as to enable the nozzle unit to emit the irrigation fluid, and a controller which is configured and arranged to receive and process input from the sensor arrangement of the nozzle unit, and to control positioning of the at least one nozzle orifice and/or a portion of the nozzle unit accommodating the at least one nozzle orifice on the basis of the input from the sensor arrangement.

Further, in conformity with what has been defined and elucidated in the foregoing, the invention provides a method of performing an oral cleaning action, wherein a flow of irrigation fluid is directed towards periodontal pockets in a subject's mouth, in a predetermined orientation with respect to a subject's respective teeth and periodontal pockets, namely an orientation towards the periodontal pockets at a pocket inflow angle in a range of 10° to 50° and towards the surface of the subject's respective teeth at a surface impact angle in a range of 0° to 50°, preferably 10° to 50°. As explained earlier, the pocket inflow angle is defined in a first plane extending parallel to a central vertical axis of the subject's respective teeth and having an interdental orientation, and the surface impact angle is defined in a second plane extending both parallel to the central vertical axis of the subject's respective teeth and perpendicular to the first plane, wherein the pocket inflow angle is an angle between a direction of the flow of irrigation fluid as projected on the first plane and a direction of the central vertical axis of the subject's respective teeth, and wherein the surface impact angle is an angle between a direction of the flow of irrigation fluid as projected on the second plane and the direction of the central vertical axis of the subject's respective teeth. As explained in the foregoing, it may particularly be so that the method involves realizing the predetermined orientation on the basis of a contribution of at least one constructional feature of a nozzle unit used for the purpose of emitting the flow of irrigation fluid.

The above-described and other aspects of the invention will be apparent from and elucidated with reference to the following detailed description of embodiments of a nozzle unit of an oral irrigator.

### BRIEF DESCRIPTION OF THE DRAWINGS

The invention will now be explained in greater detail with reference to the figures, in which equal or similar parts are indicated by the same reference signs, and in which:
Figure 1 diagrammatically shows a perspective view of two adjacent teeth and an associated gum section, and of a nozzle unit which is positioned to supply irrigation fluid to the interdental interface of the teeth;
Figure 2 illustrates how a pocket inflow angle of a flow or irrigation fluid is defined;
Figure 3 illustrates how a surface impact angle of a flow or irrigation fluid is defined;
Figure 4 diagrammatically shows a top view of two adjacent teeth and a nozzle unit according to a first embodiment of the invention, wherein a sectional view of the nozzle unit is shown;
Figure 5 diagrammatically shows a side view of the nozzle unit according to the first embodiment of the invention, wherein a sectional view of the nozzle unit is shown against a background of a tooth, and wherein further a periodontal pocket is diagrammatically shown;
Figure 6 diagrammatically shows a top view of portions of two adjacent teeth and a nozzle unit according to a second embodiment of the invention, wherein a sectional view of the nozzle unit is shown;
Figure 7 diagrammatically shows a front view of a tip of the nozzle unit according to the second embodiment of the invention;
Figure 8 diagrammatically shows a front sectional view of a tip of a nozzle unit according to a third embodiment of the invention;
Figure 9 diagrammatically shows a side sectional view of the nozzle unit according to the third embodiment of the invention;
Figure 10 diagrammatically shows a side sectional view of a nozzle unit according to a fourth embodiment of the invention; and
Figure 11 diagrammatically shows an oral irrigator including a nozzle unit according to a fifth embodiment of the invention.

### DETAILED DESCRIPTION OF EMBODIMENTS

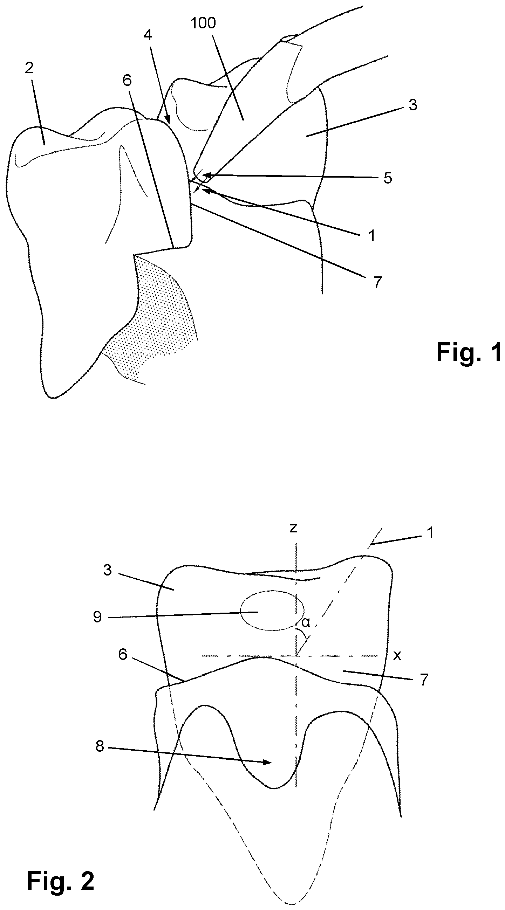

The invention relates to a nozzle unit 100 which is intended to be used as part of an oral irrigator. Figure 1 illustrates how the nozzle unit 100 can be applied for emitting a flow 1 of irrigation fluid, which is diagrammatically depicted by means of arrows in figure 1, and for directing the flow 1 of irrigation fluid towards periodontal pockets in a subject's mouth. In particular, the nozzle unit 100 is placed in the vicinity of a subject's teeth 2, 3 at the position of an interdental interface 4. The nozzle unit 100 comprises at least one nozzle orifice 5 which can be placed simply outside a pocket and still allow the irrigation fluid flowing from the at least one nozzle orifice 5 during operation to reach the full depth of the pocket, provided that the angulation and positioning of the nozzle unit 100 are set such that a predetermined orientation of the flow of irrigation fluid with respect to the teeth 2, 3 and the periodontal pocket is realized. Optimal impact positioning of the flow 1 of irrigation fluid is preferably just above a gum line 6 on the teeth 2, 3, with an optimal angulation into the pocket of 10° to 50°, combined with an angulation of 0° to 50° towards the interdental tooth surface 7. In order for a user to apply the optimal angulation in an easy fashion, the nozzle unit 100 can simply be placed on the teeth 2, 3 at the position of the interdental interface 4.

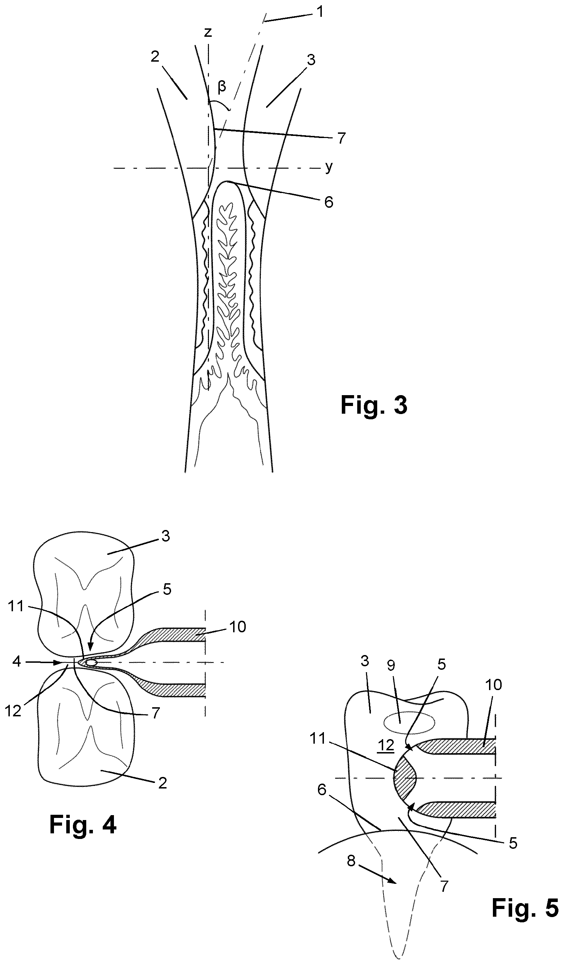

A further explanation of the two angles mentioned in the foregoing will now be provided on the basis of figures 2 and 3. In figure 2, a pocket is shown and indicated by means of reference numeral 8. An x, y, z coordinate system is defined with the zero point at the preferred impact point of the flow of irrigation fluid just above the gum line 6. The z-axis is defined as the vertical line parallel to the impact surface, the x-axis is defined as the horizontal line parallel to the impact surface, and the y-axis is defined as the horizontal line perpendicular to both the x-axis and the z-axis. An angle α between the direction of the flow 1 of irrigation fluid and the z-axis in the x-z plane projection is referred to as pocket inflow angle α, and an angle β between the direction of the flow 1 of irrigation fluid and the z-axis in the y-z plane projection is referred to as surface impact angle β.

The z-axis aligns parallel to the crown-root surface of the teeth 2, 3 in the vertical direction at the flow impact position and can thereby be denoted as aligning parallel to a central vertical axis of the teeth 2, 3. Further, the x-z plane projection is plane projection having an interdental orientation. In view thereof, the pocket inflow angle α can be defined as an angle α between (i) a direction of the flow 1 of irrigation fluid as projected on a first plane extending parallel to a central vertical axis of the teeth 2, 3 and having an interdental orientation and (ii) a direction of the central vertical axis of the teeth, and the surface impact angle β can be defined as an angle β between (i) a direction of the flow of irrigation fluid as projected on a second plane extending both parallel to the central vertical axis of the teeth 2, 3 and perpendicular to the first plane and (ii) the direction of the central vertical axis of the teeth 2, 3.

As mentioned in the foregoing, for the purpose of obtaining optimal cleaning results of the pockets 8, the nozzle unit 100 is positioned in such a way with respect to the teeth 2, 3 at the location of the interdental interface 4 that the pocket inflow angle α is in a range of 10° to 50° and the surface impact angle β is in a range of 0° to 50°. Having a pocket inflow angle α of 0° is hindered by a contact surface 9 of the teeth 2, 3, which is diagrammatically depicted as an oval in figure 2. In respect of the cleaning effect on pockets 8, experiments and simulations which have been performed in the context of the invention have demonstrated that with the optimal angulation, vortices can be obtained in the pocket, as a result of which it is assumed that the irrigation fluid is substantially equally spread throughout the pockets 8, reaching pocket areas which are more to the sides and not directly in the alignment of the flow 1 as emitted from the nozzle unit 100 through the at least one nozzle orifice 5.

It appears from the experiments and simulations which have been performed in the context of the invention that when the pocket inflow angle α is studied at a surface impact angle β of 0°, optimal cleaning is found at the pocket inflow angle α in a range of 10° to 30°. Using a pocket inflow angle α of 40°, the surface impact angle β was studied, showing the deepest removal of contaminations at 38°. The results of the experiments and simulations confirm the advantageous range of 10° to 50° in respect of the pocket inflow angle α and the range of 0° to 50° in respect of surface impact angle β, wherein it is noted with respect to the latter range that it is even more advantageous and therefore preferred to have values from 10° to 50°.

Figures 4 and 5 relate to a nozzle unit 10 according to a first embodiment of the invention. It is noted that interdental pocket cleaning is an important target, since often periodontal disease starts interdentally due to insufficient oral hygiene in most persons/subjects. In view thereof, the nozzle unit 10 is designed with a sufficiently narrow tip 11 which fits naturally into the interdental space 12. In order to cope with changing to the different quadrants of a subject's mouth, which different quadrants involve different orientations of teeth 2, 3 and pockets 8, the flow 1 of irrigation fluid is directed both up and down, as can be derived from figure 5. Alternatively, in order to save on irrigation fluid, the nozzle unit 10 could be provided with a single nozzle orifice 5 which can be rotated or bent to another side if needed.

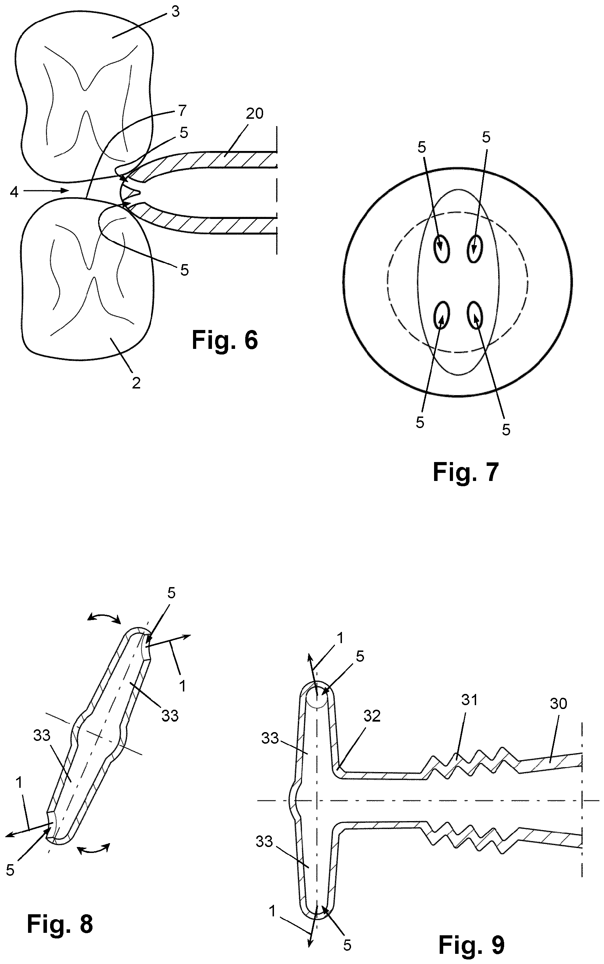

Figures 6 and 7 relate to a nozzle unit 20 according to a second embodiment of the invention, which is designed to not only ensure that an optimal value of the pocket inflow angle α can be realized, but to also direct the flow 1 of irrigation towards the interdental tooth surface 7, at an optimal value of the surface impact angle β. In particular, each of the two nozzle orifices 5 of the nozzle unit 10 according to the first embodiment of the invention is split in two nozzle orifices 5, on the basis of which it is possible to realize flows 1 of irrigation fluid which are not only directed into the pockets 8 but also slightly sideways. The optimal sideway angle can be chosen in relation to the optimal value of the surface impact angle β while taking tooth curvature into account, as a result of which the sideway angle will have a lower value than the surface impact angle β.

Figures 8 and 9 relate to a nozzle unit 30 according to a third embodiment of the invention, which is designed to enable variation of the position/orientation of the flows 1 of irrigation fluid and to thereby increase the probability of effectively cleaning the pockets 8, while compensating for variability in anatomies. In this respect, it is noted that the nozzle unit 20 according to the second embodiment of the invention could be used for emitting moving flows 1 of irrigation fluid as well, namely by employing a pulsed pressure to the nozzle unit 20, combined with having a sufficiently flexible design of the nozzle unit 20. In such a case, due to the pulses exerted during operation, the nozzle orifices 5 will move backward at every pulse, covering multiple target positions on the way back. The fact that pressure pulses can also be used to induce an oscillating rotation when the nozzle unit is designed flexible to rotate and to emit the flows 1 of irrigation fluid at radial positions is at the basis of the nozzle unit 30 according to the third embodiment of the invention.

In particular, the nozzle unit 30 according to the third embodiment of the invention includes a tubular flexible portion 31 and a distal end portion 32 extending from the flexible portion 31. The distal end portion 32 includes two radial arms 33 having a nozzle orifice 5 arranged at an end thereof, wherein it is to be noted that the number of radial arms 33 may be more than two. Under the influence of pressure pulses, an oscillating movement of the nozzle orifices 5 about a central axis of the nozzle unit 30 is obtained, as indicated in figure 8 by means of double-headed arrows.

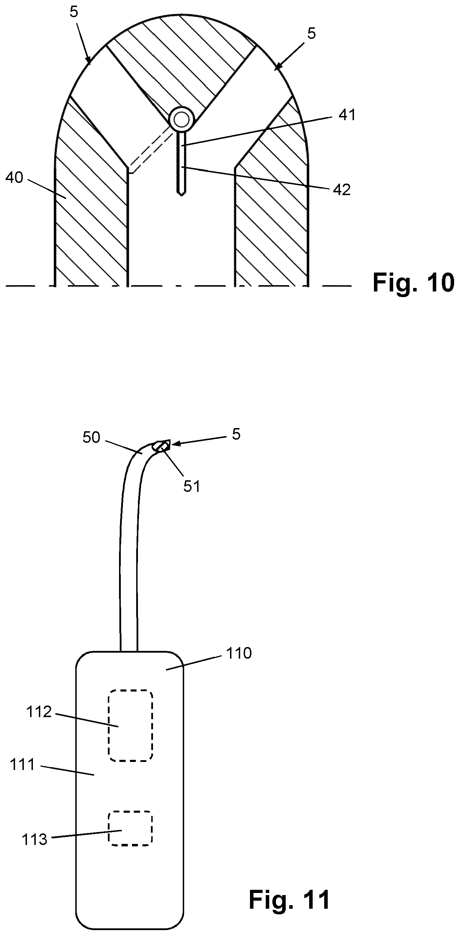

Figure 10 relates to a nozzle unit 40 according to a fourth embodiment of the invention, which is based on the nozzle unit 20 according to the second embodiment of the invention. The fact is that the nozzle unit 20 according to the second embodiment of the invention can also be used for radially emitting the flows 1 of irrigation fluid when pressure pulses are directed to two diagonally opposite nozzle orifices 5. This can be done by applying two pump channels, but more conveniently an oscillating valve could deliver the same function, all the more when a resonance frequency of the oscillating valve is close to the pulse frequency. In view thereof, the nozzle unit 40 according to a fourth embodiment of the invention is of the same design as the nozzle unit 20 according to the second embodiment of the invention and is additionally equipped with an oscillating valve 41 which comprises a movably arranged member 42, as diagrammatically shown in figure 10, which may or may not be flexible, and which may or may not be hingably arranged. In any case, the movably arranged member 42 is capable of assuming a position for closing one of the two diagonally opposite nozzle orifices 5, as indicated in figure 10 by means of dashed lines.

Other embodiments could include a fully rotating distal end portion having one or more nozzle orifices 5, wherein rotation of the distal end portion could be realized in a motorized fashion or through hydrodynamics using an impellor, for example. In such embodiments, it is possible to have a predefined pocket inflow angle α and to cover all values of the surface impact angle β by the rotation, while the flows 1 of irrigation fluid may be targeted just above the gum line 6.

Further, embodiments are feasible in which the nozzle unit is equipped with optical detectors for determining the gum line 6 and the tooth shape, such as cameras or color sensors. Advantageously, three dimensional sensing is applied for the purpose of determining the tooth curvature. In view thereof, it is noted that 3D cameras, radar, components for tactile or capacitive sensing, etc. may be used. Information obtained through sensing/detecting may then be applied to position the at least one nozzle orifice 5 of the nozzle unit in an advantageous fashion, i.e. in such a way as to achieve good pocket cleaning results. The nozzle unit may include actuators which can direct a nozzle orifice 5 to an optimal location and an optimal angle.

Figure 11 diagrammatically shows an oral irrigator 110 including a nozzle unit 50 and a handle 111. The nozzle unit 50 may be removably arranged with respect to the handle 111 so that the nozzle unit 50 can be conveniently replaced and/or cleaned as necessary, although this is not essential within the framework of the invention. A fluid supply system 112 is located in the handle 111 and serves for supplying the irrigation fluid to the nozzle unit 50 during operation, whereby the nozzle unit 50 is enabled to emit the irrigation fluid as intended. It is practical for the fluid supply system 112 to include a reservoir for containing the irrigation fluid and a suitable type of pump or the like for realizing displacement of the irrigation fluid from the reservoir to the at least one nozzle orifice 5 of the nozzle unit 50. Further, the fluid supply system 112 may be configured to let in a suitable gas such as air to the fluid at one or more appropriate positions on the line from the reservoir to the nozzle unit 50. It may be advantageous for the fluid supply system 112 to be adapted to subject the fluid to pressure pulses at a suitable frequency during operation, as suggested earlier.

The oral irrigator 110 is equipped with a controller 113 which serves for controlling operation of the oral irrigator 110. As suggested in the foregoing, it may be advantageous to have adjustable positioning of the at least one nozzle orifice 5 and/or a portion of the nozzle unit 50 accommodating the at least one nozzle orifice 5, combined with some kind of sensor arrangement 51 in the nozzle unit 50, as diagrammatically indicated in figure 11 by means of a hatched elliptical shape. In such a case, the controller 113 is used to process information received from the sensor arrangement 51 and to determine an appropriate position and orientation of the at least one nozzle orifice 5. In particular, the controller 113 may be configured and arranged to receive and process input from the sensor arrangement 51 of the nozzle unit 50 and to control positioning of the at least one nozzle orifice 5 and/or a portion of the nozzle unit 50 accommodating the at least one nozzle orifice 5 on the basis of the input from the sensor arrangement 51. Additionally or alternatively, it is possible that the sensor arrangement 51 is configured and arranged to sense the orientation of the flow 1 of irrigation fluid with respect to a subject's respective teeth 2, 3 and periodontal pockets 8 in the operational situation, and that the controller 113 is configured and arranged to receive and process input generated by the sensor arrangement 51 and to control a user interface configured to convey information to a user.

Besides the components as mentioned, the oral irrigator 110 comprises other components which contribute to the function of emitting irrigation fluid from the nozzle unit 50 during operation, as commonly known from the field or oral irrigators. For example, it is practical if the oral irrigator 110 is equipped with a user interface allowing a user to switch the oral irrigator on and off, and preferably also to control the emission of the irrigation fluid, although it is also possible to let the emission of the irrigation fluid take place in some automated manner. Another example of a practical component is a power source in the form of a battery, which may be rechargeable.

In the context of the invention, any suitable time of positioning the nozzle unit 10, 20, 30, 40, 50, 100 at a certain spot before moving on to a next one may be applicable. In order to achieve effective cleaning, it may be practical to emit irrigation fluid during several seconds, for example, 5 to 10 seconds, at each of the spots, especially trouble spots. In respect of the irrigation fluid, it is noted that this may be water, probably mixed with appropriate additives, or any other type of fluid which is suitable for oral cleaning purposes.

It will be clear to a person skilled in the art that the scope of the invention is not limited to the examples discussed in the foregoing, but that several amendments and modifications thereof are possible without deviating from the scope of the invention as defined in the attached claims. It is intended that the invention be construed as including all such amendments and modifications insofar they come within the scope of the claims or the equivalents thereof. While the invention has been illustrated and described in detail in the figures and the description, such illustration and description are to be considered illustrative or exemplary only, and not restrictive. The invention is not limited to the disclosed embodiments. The drawings are schematic, wherein details which are not required for understanding the invention may have been omitted, and not necessarily to scale.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. Any reference signs in the claims should not be construed as limiting the scope of the invention.

Elements and aspects discussed for or in relation with a particular embodiment may be suitably combined with elements and aspects of other embodiments, unless explicitly stated otherwise. Thus, the mere fact that certain measures are recited in mutually different dependent claims does not indicate that a combination of these measures cannot be used to advantage.

The term "comprise" as used in this text will be understood by a person skilled in the art as covering the term "consist of". Hence, the term "comprise" may in respect of an embodiment mean "consist of", but may in another embodiment mean "contain/include at least the defined species and optionally one or more other species".

## Claims

1. Nozzle unit (10, 20, 30, 40, 50, 100) comprising at least one nozzle orifice (5), which nozzle unit (10, 20, 30, 40, 50, 100) is designed to be used as part of an oral irrigator, for emitting a flow (1) of irrigation fluid to be directed towards periodontal pockets (8) in a subject's mouth, and
which nozzle unit (10, 20, 30, 40, 50, 100) has at least one constructional feature configured to contribute to realizing a predetermined orientation of a flow (1) of irrigation fluid with respect to a subject's respective teeth (2, 3) and periodontal pockets (8) in an operational situation involving functional placement of the nozzle unit (10, 20, 30, 40, 50, 100) with the at least one nozzle orifice (5) in the vicinity of the subject's respective teeth (2, 3) at the position of interdental interfaces (4),
namely an orientation from the at least one nozzle orifice (5) towards the periodontal pockets (8) at a pocket inflow angle (α) in a range of 10° to 50° and from the at least one nozzle orifice (5) towards the surface (7) of the subject's respective teeth (2, 3) at a surface impact angle (β) in a range of 0° to 50°,
the pocket inflow angle (α) being defined in a first plane extending parallel to a central vertical axis of the subject's respective teeth (2, 3) and having an interdental orientation, and
the surface impact angle (β) being defined in a second plane extending both parallel to the central vertical axis of the subject's respective teeth (2, 3) and perpendicular to the first plane,
wherein the pocket inflow angle (α) is an angle between a direction of the flow (1) of irrigation fluid as projected on the first plane and a direction of the central vertical axis of the subject's respective teeth (2, 3), and
wherein the surface impact angle (β) is an angle between a direction of the flow (1) of irrigation fluid as projected on the second plane and the direction of the central vertical axis of the subject's respective teeth (2, 3), **characterized by**
the at least one nozzle orifice (5) and/or portion of the nozzle unit (10, 20, 30, 40, 50, 60, 100) accommodating the at least one nozzle orifice (5) having an adjustable positioning in the nozzle unit (10, 20, 30, 40, 50, 60, 100), and
the nozzle unit further comprising a sensor arrangement (51) which is configured and arranged to sense oral configuration features, and which is configured and arranged to generate input suitable to be received and processed by a controller (113) which is configured and arranged to control positioning of the at least one nozzle orifice (5) and/or the portion of the nozzle unit (10, 20, 30, 40, 50, 100) accommodating the at least one nozzle orifice (5) on the basis of the input from the sensor arrangement (51).

2. Nozzle unit (10, 20, 30, 40, 50, 100) according to claim 1, comprising at least two nozzle orifices (5), which at least two nozzle orifices (5) are configured and arranged to emit irrigation fluid in different directions from the nozzle unit (10, 20, 30, 40, 50, 100).

3. Nozzle unit (10, 20, 30, 40, 50, 100) according to claim 2, comprising a valve arrangement (41) at a position between two nozzle orifices (5), for realizing a first operational condition in which one of the nozzle orifices (5) is opened and the other of the nozzle orifices (5) is blocked, and a second operational condition in which the one of the nozzle orifices (5) is blocked and the other of the nozzle orifices (5) is opened.

4. Nozzle unit (10, 20, 30, 40, 50, 100) according to any of claims 1-3, comprising a sensor arrangement (51) which is configured and arranged to sense the orientation of the flow (1) of irrigation fluid with respect to a subject's respective teeth (2, 3) and periodontal pockets (8) in the operational situation, and to generate input suitable to be received and processed by a controller (113) which is configured and arranged to control a user interface configured to convey information to a user.

5. Nozzle unit (10, 20, 30, 40, 50, 100) according to any of claims 1-4, comprising at least one projecting element which is configured and arranged to realize the predetermined orientation of the flow (1) of irrigation fluid through supporting the nozzle unit (10, 20, 30, 40, 50, 100) on at least one of the teeth (2, 3) and the gums (6) in a predetermined way defined by its shape and dimensions.

6. Oral irrigator (110), comprising
a nozzle unit (10, 20, 30, 40, 50, 100) according to any of claims 1-5 and
a fluid supply system (112) which is configured and arranged to supply irrigation fluid to the nozzle unit (10, 20, 30, 40, 50, 100) so as to enable the nozzle unit (10, 20, 30, 40, 50, 100) to emit the irrigation fluid.

7. Oral irrigator (110) according to claim 6, wherein the fluid supply system (112) is configured and arranged to supply irrigation fluid to the nozzle unit (10, 20, 30, 40, 50, 100) in a pulsed flow.

8. Oral irrigator (110) according to claim 6 or 7, comprising a controller (113) which is configured and arranged to receive and process input from the sensor arrangement (51) of the nozzle unit (10, 20, 30, 40, 50, 100), and to control positioning of the at least one nozzle orifice (5) and/or the portion of the nozzle unit (10, 20, 30, 40, 50, 100) accommodating the at least one nozzle orifice (5) on the basis of the input from the sensor arrangement (51).

## Patentansprüche

1. Düseneinheit (10, 20, 30, 40, 50, 100), die mindestens eine Düsenöffnung (5) umfasst, wobei die Düseneinheit (10, 20, 30, 40, 50, 100) dazu ausgelegt ist, als Teil einer Munddusche verwendet zu werden, um einen Strom (1) von Spülflüssigkeit auszustoßen, der auf Zahnfleischtaschen (8) im Mund einer Person gerichtet werden soll, und
wobei die Düseneinheit (10, 20, 30, 40, 50, 100) mindestens eine bauliche Besonderheit aufweist, die so konfiguriert ist, dass sie dazu beiträgt, eine vorbestimmte Ausrichtung eines Stroms (1) von Spülflüssigkeit in Bezug auf jeweilige Zähne (2, 3) und Zahnfleischtaschen (8) einer Person in einer Betriebssituation zu realisieren, die eine funktionelle Platzierung der Düseneinheit (10, 20, 30, 40, 50, 100) mit der mindestens einen Düsenöffnung (5) in der Nähe der jeweiligen Zähne (2, 3) der Person an der Position der interdentalen Schnittstellen (4) beinhaltet,
nämlich eine Ausrichtung von der mindestens einen Düsenöffnung (5) in Richtung der Zahnfleischtaschen (8) mit einem Tascheneinströmwinkel (α) in einem Bereich von 10° bis 50° und von der mindestens einen Düsenöffnung (5) in Richtung der Oberfläche (7) der jeweiligen Zähne (2, 3) der Person mit einem Oberflächenauftreffwinkel (β) in einem Bereich von 0° bis 50°,
wobei der Tascheneinströmwinkel (α) in einer ersten Ebene definiert ist, die sich parallel zu einer vertikalen Mittelachse der jeweiligen Zähne (2, 3) der Person erstreckt und eine interdentale Ausrichtung aufweist, und
wobei der Oberflächenauftreffwinkel (β) in einer zweiten Ebene definiert ist, die sich sowohl parallel zur vertikalen Mittelachse der jeweiligen Zähne (2, 3) der Person als auch rechtwinklig zur ersten Ebene erstreckt,
wobei der Tascheneinströmwinkel (α) ein Winkel zwischen einer Strömungsrichtung (1) der Spülflüssigkeit, wie sie auf die erste Ebene projiziert wird, und einer Richtung der vertikalen Mittelachse der jeweiligen Zähne (2, 3) der Person ist, und
wobei der Oberflächenauftreffwinkel (β) ein Winkel zwischen einer Strömungsrichtung (1) der Spülflüssigkeit, wie sie auf die zweite Ebene projiziert wird, und der Richtung der vertikalen Mittelachse der jeweiligen Zähne (2, 3) der Person ist, **dadurch gekennzeichnet, dass**
die mindestens eine Düsenöffnung (5) und/oder einer Abschnitt der Düseneinheit (10, 20, 30, 40, 50, 60, 100), der die mindestens eine Düsenöffnung (5) aufnimmt, eine einstellbare Positionierung in der Düseneinheit (10, 20, 30, 40, 50, 60, 100) aufweist, und
die Düseneinheit weiter eine Sensoranordnung (51) umfasst, die so konfiguriert und angeordnet ist, dass sie orale bauliche Besonderheiten erfasst, und die so konfiguriert und angeordnet ist, dass sie eine Eingabe erzeugt, die geeignet ist, von einer Steuereinheit (113) empfangen und verarbeitet zu werden, die so konfiguriert und angeordnet ist, dass sie die Positionierung der mindestens einen Düsenöffnung (5) und/oder des Abschnitts der Düseneinheit (10, 20, 30, 40, 50, 100), der die mindestens eine Düsenöffnung (5) aufnimmt, auf der Grundlage der Eingabe von der Sensoranordnung (51) steuert.

2. Düseneinheit (10, 20, 30, 40, 50, 100) nach Anspruch 1, die mindestens zwei Düsenöffnungen (5) umfasst, wobei die mindestens zwei Düsenöffnungen (5) so konfiguriert und angeordnet sind, dass sie Spülflüssigkeit in unterschiedliche Richtungen aus der Düseneinheit (10, 20, 30, 40, 50, 100) ausstoßen.

3. Düseneinheit (10, 20, 30, 40, 50, 100) nach Anspruch 2, die eine Ventilanordnung (41) an einer Position zwischen zwei Düsenöffnungen (5) umfasst, um eine erste Betriebsbedingung, in der eine der Düsenöffnungen (5) geöffnet und die andere der Düsenöffnungen (5) blockiert ist, und eine zweite Betriebsbedingung, in der die eine der Düsenöffnungen (5) blockiert und die andere der Düsenöffnungen (5) geöffnet ist, zu realisieren.

4. Düseneinheit (10, 20, 30, 40, 50, 100) nach einem der Ansprüche 1-3, die eine Sensoranordnung (51) umfasst, die so konfiguriert und angeordnet ist, dass sie die Ausrichtung des Stroms (1) der Spülflüssigkeit in Bezug auf jeweilige Zähne (2, 3) und Zahnfleischtaschen (8) einer Person in der Betriebssituation erfasst und eine Eingabe erzeugt, die geeignet ist, von einer Steuereinheit (113) empfangen und verarbeitet zu werden, die so konfiguriert und angeordnet ist, dass sie eine Benutzerschnittstelle steuert, die so konfiguriert ist, dass sie Informationen an einen Benutzer übermittelt.

5. Düseneinheit (10, 20, 30, 40, 50, 100) nach einem der Ansprüche 1-4, die mindestens ein vorstehendes Element umfasst, das so konfiguriert und angeordnet ist, dass es die vorbestimmte Ausrichtung des Stroms (1) der Spülflüssigkeit durch Abstützen der Düseneinheit (10, 20, 30, 40, 50, 100) auf mindestens einem der Zähne (2, 3) und dem Zahnfleisch (6) in einer durch seine Form und Abmessungen definierten Weise realisiert.

6. Munddusche (110), umfassend
eine Düseneinheit (10, 20, 30, 40, 50, 100) nach einem der Ansprüche 1-5 und
ein Flüssigkeitszufuhrsystem (112), das so konfiguriert und angeordnet ist, dass es der Düseneinheit (10, 20, 30, 40, 50, 100) Spülflüssigkeit zuführt, so dass die Düseneinheit (10, 20, 30, 40, 50, 100) die Spülflüssigkeit ausstoßen kann.

7. Munddusche (110) nach Anspruch 6, wobei das Flüssigkeitszufuhrsystem (112) konfiguriert und angeordnet ist, um der Düseneinheit (10, 20, 30, 40, 50, 100) Spülflüssigkeit in einem gepulsten Strom zuzuführen.

8. Munddusche (110) nach Anspruch 6 oder 7, die eine Steuereinheit (113) umfasst, die so konfiguriert und angeordnet ist, dass sie Eingaben von der Sensoranordnung (51) der Düseneinheit (10, 20, 30, 40, 50, 100) empfängt und verarbeitet, und die Positionierung der mindestens einen Düsenöffnung (5) und/oder des Abschnitts der Düseneinheit (10, 20, 30, 40, 50, 100), der die mindestens eine Düsenöffnung (5) aufnimmt, auf der Grundlage der Eingaben von der Sensoranordnung (51) steuert.

## Revendications

1. Unité de buse (10, 20, 30, 40, 50, 100) comprenant au moins un orifice de buse (5), laquelle unité de buse (10, 20, 30, 40, 50, 100) est conçue pour être utilisée comme partie d'un irrigateur oral, pour émettre un écoulement (1) de fluide d'irrigation destiné à être dirigé vers des poches parodontales (8) dans la bouche d'un sujet, et
laquelle unité de buse (10, 20, 30, 40, 50, 100) présente au moins une caractéristique de construction configurée pour contribuer à réaliser une orientation prédéterminée d'un écoulement (1) de fluide d'irrigation par rapport aux dents (2, 3) respectives d'un sujet et des poches parodontales (8) dans une situation opérationnelle impliquant le placement fonctionnel de l'unité de buse (10, 20, 30, 40, 50, 100) avec le au moins un orifice de buse (5) à proximité des dents (2, 3) respectives du sujet au niveau des interfaces interdentaires (4),
à savoir une orientation depuis le au moins un orifice de buse (5) vers les poches parodontales (8) selon un angle d'entrée de poche (a) dans une plage de 10° à 50° et depuis le au moins un orifice de buse (5) vers la surface (7) des dents (2, 3) respectives du sujet selon un angle d'impact de surface (P) dans une plage de 0° à 50°,
l'angle d'entrée de poche (a) étant défini dans un premier plan s'étendant parallèlement à un axe vertical central des dents (2, 3) respectives du sujet et présentant une orientation interdentaire, et
l'angle d'impact de surface (P) étant défini dans un second plan s'étendant à la fois parallèlement à l'axe vertical central des dents (2, 3) respectives du sujet et perpendiculairement au premier plan,
dans lequel l'angle d'entrée de poche (a) est un angle entre une direction de l'écoulement (1) du fluide d'irrigation tel que projeté sur le premier plan et une direction de l'axe vertical central des dents (2, 3) respectives du sujet, et
dans lequel l'angle d'impact de surface (P) est un angle entre une direction de l'écoulement (1) du fluide d'irrigation tel que projeté sur le second plan et la direction de l'axe vertical central des dents (2, 3) respectives du sujet, **caractérisé par**
le au moins un orifice de buse (5) et/ou une partie de l'unité de buse (10, 20, 30, 40, 50, 60, 100) recevant le au moins un orifice de buse (5) présentant un positionnement réglable dans l'unité de buse (10, 20, 30, 40, 50, 60, 100), et
l'unité de buse comprenant en outre un agencement de capteurs (51) qui est configuré et conçu pour détecter des caractéristiques de configuration orale, et qui est configuré et conçu pour générer une entrée appropriée pour être reçue et traitée par un dispositif de commande (113) qui est configuré et conçu pour commander le positionnement du au moins un orifice de buse (5) et/ou de la partie de l'unité de buse (10, 20, 30, 40, 50, 100) recevant le au moins un orifice de buse (5) sur la base de l'entrée provenant de l'agencement de capteurs (51).

2. Unité de buse (10, 20, 30, 40, 50, 100) selon la revendication 1, comprenant au moins deux orifices de buse (5), lesquels au moins deux orifices de buse (5) sont configurés et conçus pour émettre un fluide d'irrigation dans des directions différentes depuis l'unité de buse (10, 20, 30, 40, 50, 100).

3. Unité de buse (10, 20, 30, 40, 50, 100) selon la revendication 2, comprenant un agencement de soupapes (41) à une position entre deux orifices de buse (5), pour réaliser une première condition opérationnelle dans laquelle l'un des orifices de buse (5) est ouvert et l'autre des orifices de buse (5) est bloqué, et une seconde condition opérationnelle dans laquelle l'un des orifices de buse (5) est bloqué et l'autre des orifices de buse (5) est ouvert.

4. Unité de buse (10, 20, 30, 40, 50, 100) selon l'une quelconque des revendications 1-3, comprenant un agencement de capteurs (51) qui est configuré et conçu pour détecter l'orientation de l'écoulement (1) de fluide d'irrigation par rapport aux dents (2, 3) respectives et aux poches parodontales (8) d'un sujet dans la situation opérationnelle, et pour générer une entrée appropriée pour être reçue et traitée par un dispositif de commande (113) qui est configuré et conçu pour commander une interface utilisateur configurée pour transmettre des informations à un utilisateur.

5. Unité de buse (10, 20, 30, 40, 50, 100) selon l'une quelconque des revendications 1-4, comprenant au moins un élément en saillie qui est configuré et conçu pour réaliser l'orientation prédéterminée de l'écoulement (1) de fluide d'irrigation en supportant l'unité de buse (10, 20, 30, 40, 50, 100) sur au moins l'une des dents (2, 3) et des gencives (6) d'une manière prédéterminée définie par sa forme et ses dimensions.

6. Irrigateur oral (110), comprenant
une unité de buse (10, 20, 30, 40, 50, 100) selon l'une quelconque des revendications 1-5 et
un système d'alimentation en fluide (112) qui est configuré et conçu pour apporter un fluide d'irrigation à l'unité de buse (10, 20, 30, 40, 50, 100) de manière à permettre à l'unité de buse (10, 20, 30, 40, 50, 100) d'émettre le fluide d'irrigation.

7. Irrigateur oral (110) selon la revendication 6, dans lequel le système d'alimentation en fluide (112) est configuré et conçu pour apporter un fluide d'irrigation à l'unité de buse (10, 20, 30, 40, 50, 100) selon un flux pulsé.

8. Irrigateur oral (110) selon la revendication 6 ou 7, comprenant un dispositif de commande (113) qui est configuré et conçu pour recevoir et traiter l'entrée provenant de l'agencement de capteurs (51) de l'unité de buse (10, 20, 30, 40, 50, 100), et pour commander le positionnement du au moins un orifice de buse (5) et/ou de la partie de l'unité de buse (10, 20, 30, 40, 50, 100) recevant le au moins un orifice de buse (5) sur la base de l'entrée provenant de l'agencement de capteurs (51).
